(19) Europäisches Patentamt
European Patent Office
Office européen des brevets

(11) **EP 4 723 702 A1**

(12) **EUROPEAN PATENT APPLICATION**
published in accordance with Art. 153(4) EPC

(43) Date of publication:
**08.04.2026 Bulletin 2026/15**

(21) Application number: **23941098.8**

(22) Date of filing: **16.06.2023**

(51) International Patent Classification (IPC):
**H04W 12/03** (2021.01)

(52) Cooperative Patent Classification (CPC):
**H04W 12/03**

(86) International application number:
**PCT/CN2023/100802**

(87) International publication number:
**WO 2024/254865 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **SUN, Li**
**Shenzhen, Guangdong 518129 (CN)**
• **WANG, Wenhui**
**Shenzhen, Guangdong 518129 (CN)**
• **LIU, Peng**
**Shenzhen, Guangdong 518129 (CN)**

(74) Representative: **Maiwald GmbH**
**Elisenhof**
**Elisenstraße 3**
**80335 München (DE)**

(54) **COMMUNICATION METHOD AND APPARATUS**

(57)    This application discloses a communication method and apparatus. The method includes: A first apparatus performs security processing on q first message packets to obtain q second message packets; after reordering the q second message packets, the first apparatus may perform security processing on the q reordered second message packets to obtain q third message packets; and then, the first apparatus may send q signals, where the q signals are obtained based on the q third message packets. According to the method, at a non-target receiving node, an error can be diffused in a plurality of message packets to the greatest extent, to improve message security.

FIG. 3

**Description**

TECHNICAL FIELD

This application relates to the field of communication technologies, and in particular, to a communication method and apparatus.

BACKGROUND

Secure transmission is a fundamental guarantee for communication. Currently, most secure transmission schemes are based on keys. For example, the secure transmission schemes include symmetric encryption and asymmetric encryption. In the symmetric encryption scheme, two communication parties share a key, and encrypt and decrypt messages by using the shared key. In the asymmetric encryption scheme, one communication party sends a public key to the other communication party, a transmit end encrypts a to-be-sent message by using the public key, and a receive end decrypts the received message by using a private key corresponding to the public key. Regardless of which encryption scheme is used, both communication parties need to maintain and manage a key. Key maintenance and management require support of complex protocols, but vulnerabilities in the protocols are often exploited by non-target receiving nodes, resulting in reduced message security.

In addition, some messages are transmitted before key agreement, making it impossible to apply key-based secure transmission schemes to these messages. Consequently, security of these messages is reduced.

SUMMARY

This application provides a communication method and apparatus, to improve message security.

According to a first aspect, an embodiment of this application provides a communication method. The method may be performed by a first apparatus. The first apparatus may be an access network device or a terminal device, or may be an apparatus configured in an access network device or a terminal device. This is not limited in this application.

The method includes: The first apparatus performs security processing on q first message packets to obtain q second message packets, where q is an integer greater than or equal to 1; and after reordering the q second message packets, the first apparatus may perform security processing on the q reordered second message packets to obtain q third message packets, and send q signals, where the q signals are obtained based on the q third message packets.

According to the method, after performing first-time security processing on the q first message packets, the first apparatus may reorder the obtained q second message packets, and perform second-time security processing on the q reordered second message packets. In this way, at a non-target receiving node, an error can be diffused in a plurality of message packets to the greatest extent, to improve message security.

In a possible design, the first apparatus may reorder the q second message packets by arranging the q second message packets in reverse order. In this way, at the non-target receiving node, an error in each message packet may be diffused to any one of the q message packets, to improve message security.

In a possible design, the first apparatus may further obtain a to-be-transmitted message, where the to-be-transmitted message includes the q first message packets. In this way, at the non-target receiving node, an error can be diffused in a plurality of message packets to the greatest extent in a to-be-transmitted message, to improve message security.

In a possible design, the first apparatus may send the q signals after obtaining the q third message packets. Alternatively, the first apparatus may send an $a^{th}$ signal in the q signals after obtaining an $a^{th}$ third message packet in the q third message packets, where the $a^{th}$ signal is obtained based on the $a^{th}$ third message packet, and a sequentially traverses any positive integer from 1 to q. This design is flexible in implementation.

In a possible design, when determining that a receive end fails to decode an $(a-1)^{th}$ signal in the q signals, and a is greater than or equal to 2, and less than or equal to q, the first apparatus may perform security processing on an $a^{th}$ second message packet based on a fixed sequence to obtain the $a^{th}$ third message packet. According to this design, when a signal fails to be decoded, the first apparatus performs security processing on a subsequent message packet based on a fixed sequence, to avoid performing security processing on the subsequent message packet based on the signal that fails to be decoded, further avoid diffusion, at a second apparatus, of an error corresponding to the signal that fails to be decoded, and improve message security while quality of communication between the first apparatus and the second apparatus is ensured.

In a possible design, the first apparatus may perform security processing on the $a^{th}$ second message packet based on the fixed sequence in one of the following manners, to obtain the $a^{th}$ third message packet.

Manner 1: The first apparatus sets an $(a-1)^{th}$ second message packet in the q reordered second message packets as the fixed sequence, and determines a first random seed based on the fixed sequence that is set. Then, the first apparatus performs an operation on the first random seed and the $a^{th}$ second message packet to complete security processing and obtain the $a^{th}$ third message packet. In Manner 1, at the second apparatus, diffusion of an error between different message packets can be avoided.

Manner 2: The first apparatus sets a first random seed as the fixed sequence, and performs an operation on the fixed sequence that is set and the $a^{th}$ second message packet to complete security processing and obtain the $a^{th}$ third message packet. In Manner 2, at the second apparatus, diffusion of an error between different message packets can be avoided.

In a possible design, the first apparatus may obtain a to-be-transmitted message, where the to-be-transmitted message includes K message packet sets, an $i^{th}$ message packet set in the K message packet sets includes the q first message packets, K is an integer greater than or equal to 2, and i traverses any positive integer from 1 to K. According to this design, the first apparatus divides the to-be-transmitted messages into a plurality of sets, and adjusts a quantity of message packets included in each set, so that transmission reliability and security can be balanced. In addition, in this design, the first apparatus needs to buffer only q second message packets corresponding to one set, and does not need to buffer all second message packets corresponding to the to-be-transmitted message, so that buffer overheads can be reduced.

In a possible design, a first initial random seed is used to perform security processing on the q first message packets corresponding to the $i^{th}$ message packet set and/or the q reordered second message packets corresponding to the $i^{th}$ message packet set.

In some examples, the first initial random seed is a specified random seed. In this way, an error can be diffused inside each set, and an error in one set is not diffused to another set, so that message security can be improved while performance of communication between the second apparatus and the first apparatus is ensured.

In some other examples, when i is 1, or when i is greater than 1 and it is determined that a receive end fails to decode one or more signals corresponding to an $(i-1)^{th}$ message packet set, the first initial random seed is a specified random seed; and/or when i is greater than 1 and it is determined that the receive end successfully decodes all signals corresponding to the $(i-1)^{th}$ message packet set, the first initial random seed is a random seed obtained based on the $(i-1)^{th}$ message packet set. In this way, when the second apparatus successfully decodes all signals corresponding to a message packet set, the message packet set may be used for security processing of a subsequent message packet set, to avoid performing security processing based on a message packet set that fails to be decoded, further avoid diffusion, between different sets, of an error corresponding to a signal that fails to be decoded, and improve message security while quality of communication between the first apparatus and the second apparatus is ensured.

In a possible design, that the first initial random seed is the random seed obtained based on the $(i-1)^{th}$ message packet set when the first initial random seed is used to perform security processing on the q first message packets corresponding to the $i^{th}$ message packet set includes: The first initial random seed is obtained by performing security processing on a last first message packet in the $(i-1)^{th}$ message packet set; and/or that the first initial random seed is the random seed obtained based on the $(i-1)^{th}$ message packet set when the first initial random seed is used to perform security processing on the q reordered second message packets corresponding to the $i^{th}$ message packet set includes: The first initial random seed is obtained by performing security processing on a last reordered second message packet corresponding to the $(i-1)^{th}$ message packet set. According to this design, the first apparatus can quickly obtain the first initial random seed, to improve a speed and efficiency of processing a message packet.

In a possible design, when determining that the receive end fails to decode the $a^{th}$ signal in the q signals, the first apparatus may resend the $a^{th}$ signal until the receive end successfully decodes the $a^{th}$ signal or until a quantity of transmissions of the $a^{th}$ signal reaches a quantity threshold, where a traverses any positive integer from 1 to q. According to this design, signal receiving performance of the second apparatus can be improved.

In a possible design, an $a^{th}$ second message packet in the q second message packets is obtained by performing security processing on an $a^{th}$ first message packet in the q first message packets; the $a^{th}$ third message packet in the q third message packets is obtained by performing security processing on the $a^{th}$ second message packet in the q reordered second message packets; the $a^{th}$ signal in the q signals is obtained based on the $a^{th}$ third message packet in the q third message packets; and a traverses any positive integer from 1 to q.

According to a second aspect, an embodiment of this application provides a communication method. The method may be performed by a second apparatus. The second apparatus may be an access network device or a terminal device, or may be an apparatus configured in an access network device or a terminal device. This is not limited in this application.

The method includes: The second apparatus receives q signals, and obtains q third message packets based on the q signals, where q is an integer greater than or equal to 1; the second apparatus may perform inverse security processing on the q third message packets to obtain q second message packets; and after reordering the q second message packets, the second apparatus may perform inverse security processing on the q reordered second message packets to obtain q first message packets.

According to the method, after performing first-time inverse security processing on the q third message packets, the second apparatus may reorder the obtained q second message packets, and perform second-time inverse security processing on the q reordered second message packets. In this way, at a non-target receiving node, an error can be diffused in a plurality of message packets to the greatest extent, and in the second apparatus, errors are not diffused over a plurality of message packets, so that message security can be improved while quality of communication between a first apparatus and the second apparatus is ensured.

In a possible design, the second apparatus may reorder the q second message packets by arranging the q second message packets in reverse order. In this way, at the non-target receiving node, an error in each message packet may be diffused to any one of the q message packets, to improve message security.

In a possible design, the second apparatus may receive a first message, where the first message includes the q signals. In this way, at the non-target receiving node, an error can be diffused in a plurality of message packets to the greatest extent in a to-be-transmitted message, to improve message security.

In a possible design, after receiving the q signals, the second apparatus may obtain the q third message packets based on the q signals. Alternatively, after receiving an $a^{th}$ signal in the q signals, the second apparatus may obtain an $a^{th}$ third message packet in the q third message packets based on the $a^{th}$ signal, where a sequentially traverses any positive integer from 1 to q. This design is flexible in implementation.

In a possible design, when a receive end fails to decode an $(a-1)^{th}$ signal in the q signals, the second apparatus may perform inverse security processing on the $a^{th}$ third message packet based on a fixed sequence to obtain the $a^{th}$ second message packet. According to this design, when a signal fails to be decoded, the second apparatus performs inverse security processing on a subsequent message packet based on a fixed sequence, to avoid performing inverse security processing on the subsequent message packet based on the signal that fails to be decoded, further avoid diffusion, at the second apparatus, of an error corresponding to the signal that fails to be decoded, and improve message security while quality of communication between the first apparatus and the second apparatus is ensured.

In a possible design, the second apparatus may perform inverse security processing on the $a^{th}$ third message packet based on the fixed sequence in one of the following manners, to obtain the $a^{th}$ second message packet.

Manner 1: The second apparatus may set an $(a-1)^{th}$ second message packet in the q second message packets as the fixed sequence, and determine a second random seed based on the fixed sequence that is set. Then, the second apparatus may perform an operation on the second random seed and the $a^{th}$ third message packet to complete inverse security processing and obtain the $a^{th}$ second message packet. In Manner 1, at the second apparatus, diffusion of an error between different message packets can be avoided.

Manner 2: The second apparatus sets a second random seed as the fixed sequence, and performs an operation on the fixed sequence that is set and the $a^{th}$ third message packet to complete inverse security processing and obtain the $a^{th}$ second message packet. In Manner 2, at the second apparatus, diffusion of an error between different message packets can be avoided.

In a possible design, the second apparatus receives a second message, where the second message includes K signal sets, an $i^{th}$ signal set in the K signal sets includes the q signals, K is an integer greater than or equal to 2, and i traverses all values from 1 to K. According to this design, a transmitted message may include a plurality of sets, and a quantity of signals included in each set is adjusted, so that transmission reliability and security can be balanced.

In a possible design, a second initial random seed is used to perform inverse security processing on the q third message packets corresponding to the $i^{th}$ signal set and/or the q reordered second message packets corresponding to the $i^{th}$ signal set.

In some examples, the second initial random seed is a specified random seed. In this way, an error can be diffused inside each set, and an error in one set is not diffused to another set, so that message security can be improved while performance of communication between the second apparatus and the first apparatus is ensured.

In some other examples, when i is 1, or when i is greater than 1 and one or more signals in an $(i-1)^{th}$ signal set fail to be decoded, the second initial random seed is a specified random seed; and/or when i is greater than 1 and all signals in the $(i-1)^{th}$ signal set are successfully decoded, the second initial random seed is a random seed obtained based on the $(i-1)^{th}$ signal set. In this way, when the second apparatus successfully decodes all signals corresponding to a message packet set, the message packet set may be used for inverse security processing of a subsequent message packet set, to avoid performing inverse security processing based on a message packet set that fails to be decoded, further avoid diffusion, between different sets, of an error corresponding to a signal that fails to be decoded, and improve message security while quality of communication between the first apparatus and the second apparatus is ensured.

In a possible design, that the second initial random seed is the random seed obtained based on the $(i-1)^{th}$ signal set when the second initial random seed is used to perform inverse security processing on the q third message packets corresponding to the $i^{th}$ signal set includes: The second initial random seed is obtained by performing inverse security processing on a last third message packet corresponding to the $(i-1)^{th}$ signal set; and/or that the second initial random seed is the random seed obtained based on the $(i-1)^{th}$ signal set when the second initial random seed is used to perform inverse security processing on the q reordered second message packets corresponding to the $i^{th}$ signal set includes: The second initial random seed is obtained by performing inverse security processing on a last reordered second message packet corresponding to the $(i-1)^{th}$ signal set. According to this design, the first apparatus can quickly obtain the first initial random seed, to improve a speed and efficiency of processing a message packet.

In a possible design, the $a^{th}$ third message packet in the q third message packets is obtained based on the $a^{th}$ signal in the q signals; the $a^{th}$ second message packet in the q second message packets is obtained by performing inverse security processing on the $a^{th}$ third message packet in the q third message packets; an $a^{th}$ first message packet in the q first message packets is obtained by performing inverse security processing on an $a^{th}$ second message packet in the q reordered second message packets; and a traverses any positive integer from 1 to q.

According to a third aspect, an embodiment of this application provides a communication apparatus, including units configured to perform the steps in any one of the foregoing aspects.

According to a fourth aspect, an embodiment of this application provides a communication apparatus, including a processor. The processor is configured to perform the methods described in the foregoing aspects.

Optionally, the apparatus may further include a memory, configured to store instructions and data. The memory is coupled to the processor. When executing the instructions stored in the memory, the processor may implement the methods described in the foregoing aspects.

According to a fifth aspect, an embodiment of this application provides a communication system, including: a first apparatus configured to perform the method provided in the first aspect, and a second apparatus configured to perform the method provided in the second aspect.

According to a sixth aspect, an embodiment of this application further provides a computer program product including computer executable instructions. When the computer program product is run, some or all steps of the method in any one of the foregoing aspects are performed.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects.

According to an eighth aspect, an embodiment of this application further provides a chip. The chip is configured to read a computer program stored in a memory, to perform the method provided in any one of the foregoing aspects.

According to a ninth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the third aspect to the ninth aspect, refer to descriptions of technical effects that can be achieved in any one of the possible designs in the first aspect or the second aspect. Details are not described herein again.

BRIEF DESCRIPTION OF DRAWINGS

FIG. 1 is a diagram of an architecture of a communication system according to an embodiment of this application;
FIG. 2 is a diagram of an architecture of keyless secure transmission according to an embodiment of this application;
FIG. 3 is a flowchart of a communication method according to an embodiment of this application;
FIG. 4 is a diagram 1 of performing security processing on a message packet by a first apparatus according to an embodiment of this application;
FIG. 5 is a diagram of performing security processing on q first message packets by a randomness extractor according to an embodiment of this application;
FIG. 6 is a diagram 2 of performing security processing on a message packet by a first apparatus according to an embodiment of this application;
FIG. 7 is a diagram of effect according to an embodiment of this application;
FIG. 8 is a diagram 3 of performing security processing on a message packet by a first apparatus according to an embodiment of this application;
FIG. 9 is a diagram of a structure of a communication apparatus according to an embodiment of this application; and
FIG. 10 is a diagram of a structure of another communication apparatus according to an embodiment of this application.

DESCRIPTION OF EMBODIMENTS

The technical solutions provided in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or a new radio (new radio, NR) system, a wireless local area network (wireless local area network, WLAN) system, a wireless fidelity (wireless fidelity, Wi-Fi) system, a 6th generation (6th Generation, 6G) communication system, and a future communication system. The 5G mobile communication system may be non-standalone (non-standalone, NSA) networking or standalone (standalone, SA) networking.

The technical solutions provided in this application may be further applied to machine-type communication (machine-type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

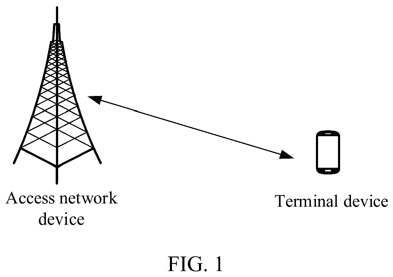

FIG. 1 is a diagram of an architecture of a communication system to which an embodiment of this application is applicable. As shown in FIG. 1, the communication system may include a terminal device (terminal device) and an access network device.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user), for example, a handheld device or a vehicle-mounted device with a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a sound box, a set-top box, or the like.

The access network device is a device in a wireless network, for example, includes a radio access network (radio access network, RAN) node that connects the terminal device to the wireless network, or a radio access network device. Currently, for example, the access network device may be a next generation NodeB (gNodeB, gNB) in 5G, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or integrated access and backhaul (integrated access and backhaul, IAB). In some implementations, the access network device may alternatively be an access network device in a future communication system (for example, a 6G communication system).

In a network structure, the access network device may alternatively be a central unit (central unit, CU) or a distributed unit (distributed unit, DU), or the access network device may include a CU and a DU. The CU and the DU are separately disposed, or may be included in a same network element, for example, a BBU. It may be understood that the access network device is divided into the CU and the DU from a perspective of logical functions. The CU is connected to the DU through an F1 interface. On behalf of a gNB, the CU may be connected to a core network through an NG interface. The CU and the DU may be physically separated, or may be deployed together. This is not specifically limited in this embodiment of this application. One CU may be connected to one DU, or a plurality of DUs may share one CU, so that costs can be reduced, and network extension can be easily performed. The CU and the DU may be split based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed on the CU, and a remaining radio link control (radio link control, RLC) layer, media access control (media access control, MAC) layer, physical layer (PHY), and the like are deployed on the DU. This embodiment of this application is not completely limited to the foregoing protocol stack splitting manner, and there may be another splitting manner.

In addition, the access network device may alternatively be a radio unit (radio unit, RU, or the like). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU, the DU, or the RU may also have different names, but a person skilled in the art may understand meanings thereof. For example, in an open radio access network (open radio access network, O-RAN) system, a CU may be referred to as an O-CU (open CU), a DU may be referred to as an O-DU (open DU), and an RU may be referred to as an O-RU (open RU).

In this embodiment of this application, a communication apparatus configured to implement a function of the access network device or a function of the terminal device may be the access network device or the terminal device, or may be an apparatus that can support the access network device or the terminal device in implementing the function, for example, a chip system, and the apparatus may be mounted in the access network device or the terminal device.

It should be understood that FIG. 1 is merely a simplified diagram of an example for ease of understanding. The communication system may further include another access network device and/or another terminal device that are/is not shown in FIG. 1.

It should be further understood that the communication system shown in FIG. 1 is merely an example of an application scenario of this embodiment of this application, and this application may be further applicable to communication between any two devices, for example, communication between terminal devices and communication between access network devices.

The following describes terms in this application.

1. Keyless secure transmission architecture:

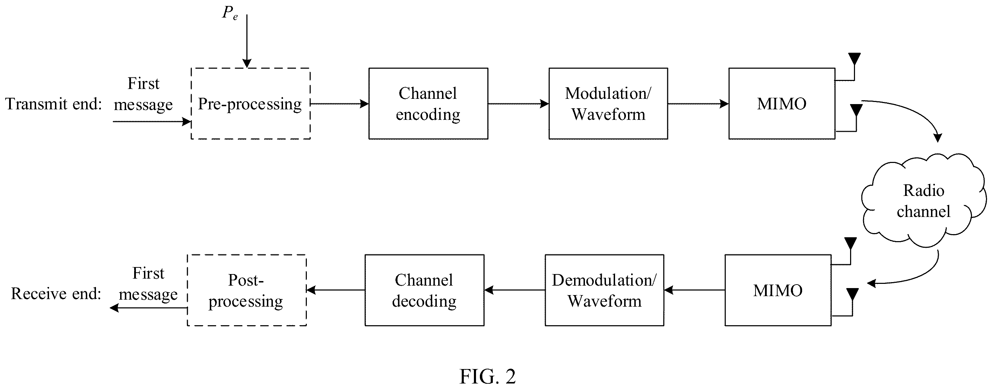

FIG. 2 is a diagram of data transmission in the keyless secure transmission architecture. As shown in FIG. 2, after pre-processing, a to-be-sent first message sequentially enters a channel encoding procedure, a modulation/waveform procedure, and a multiple-input multiple-output (multiple-input multiple-output, MIMO) procedure, and is sent by a transmit end to a receive end through a radio channel; and after a MIMO procedure, a demodulation/waveform procedure, and a channel decoding procedure are sequentially performed on a message received by the receive end, a first message may be obtained after post-processing.

The post-processing is inverse processing of the pre-processing. The pre-processing and the post-processing may be performed by security modules. At the transmit end, a security module is configured to perform security processing on an input message. At the receive end, a security module is configured to perform inverse security processing on an input message. Optionally, the security module may be a randomness extractor, configured to perform randomness extraction processing on an input message. The randomness extractor may be a hardware device, or may be implemented by using software.

2. A random seed may also be referred to as a random bit, a random bit stream, random entropy, status information, or the like, and may be used to perform security processing on a message input to a security module, for example, used to perform encryption or integrity protection on the message input to the security module. Optionally, the random seed may be directly used to perform security processing on the message input to the security module; or may be used to generate a key by using an algorithm, where the key is used to perform security processing on the message input to the security module.

3. A message packet may also be referred to as a code block or a data packet, and is a part of a message. One message may include one or more message packets. When the message includes one message packet, the message packet may also be referred to as a message. The message packet may include, for example, a source message packet and an encoded code block group.

4. In this application, "when...", "if..., ...", and "if..., ..." may indicate a same meaning, and may be replaced with each other.

Currently, a working principle of a security module includes: performing security processing on a plurality of message packets based on a random seed. A random seed corresponding to a message packet with a later sequence number is obtained based on a message packet with an earlier sequence number. In this way, channel noise entropy of a previous message packet may be accumulated between a plurality of message packets, to implement error diffusion between different message packets. This deteriorates decoding performance of a non-target receiving node.

However, if an error occurs in a message packet with a later sequence number, for example, the error occurs in a last message packet, the non-target receiving node may correctly decode most of the message packets, affecting message security.

In addition, a security level that can be reached by a communication system and an error floor of the non-target receiving node satisfy the following relationship:

$$\frac{\lambda}{L} = H_{\infty}(X|Z) \le \log \frac{1}{1 - p_e}$$

Herein, $\lambda$ indicates the security level, L indicates a length of the message packet, $H_{\infty}(X|Z)$ indicates minimum entropy per bit, and $p_e$ indicates an error floor introduced at a target receiving node. It can be learned from the formula that there is a positive correlation between the security level and the error floor. If the communication system uses a feedback retransmission (for example, a hybrid automatic repeat request (Hybrid Automatic Repeat Request, HARQ)) mechanism to improve transmission reliability of the target receiving node, the non-target receiving node may also use the mechanism to improve bit error performance of the non-target receiving node, to reduce $p_e$. As a result, the minimum entropy introduced by a physical layer secure transmission technology to the non-target receiving node is insufficient, and the security level is reduced.

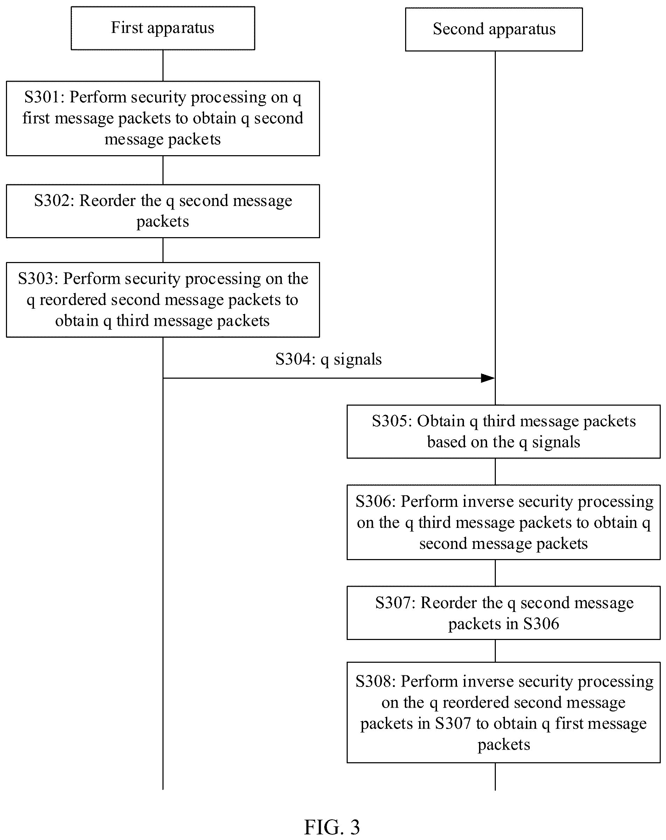

In view of this, an embodiment of this application provides a communication method. The method may be applied to the communication system shown in FIG. 1. Refer to a flowchart shown in FIG. 3. The following specifically describes a procedure of the method by using an example in which a transmit end is a first apparatus and a receive end is a second apparatus. The first apparatus may be an access network device or a terminal device, may be an apparatus (for example, a chip system or a module) that is in an access network device and that is configured to implement a function of the access network device, or may be an apparatus (for example, a chip system or a module) that is in a terminal device and that is configured to implement a function of the terminal device. The second apparatus may be an access network device or a terminal device, may be an apparatus that is in an access network device and that is configured to implement a function of the access network device, or may be an apparatus that is in a terminal device and that is configured to implement a function of the terminal device. Optionally, the first apparatus and/or the second apparatus may be a CU or a DU.

The method includes S301 to S308.

S301: The first apparatus performs security processing on q first message packets to obtain q second message packets, where q is an integer greater than or equal to 1.

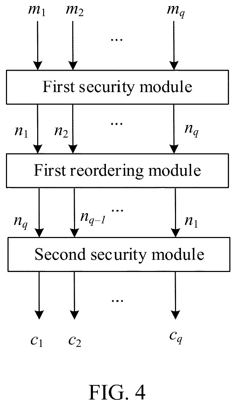

Optionally, the security processing is implemented by using a first security module. In this case, the first apparatus may input the q first message packets to the first security module to obtain the q second message packets. The first security module is configured to perform security processing on the q first message packets. For example, the first security module is a randomness extractor, and the security processing is randomness extraction processing. For example, as shown in FIG. 4, the q first message packets are denoted as $m_1, m_2, ...,$ and $m_q$. The first security module performs security processing on the q first message packets to obtain the q second message packets, which are denoted as $n_1, n_2, ...,$ and $n_q$.

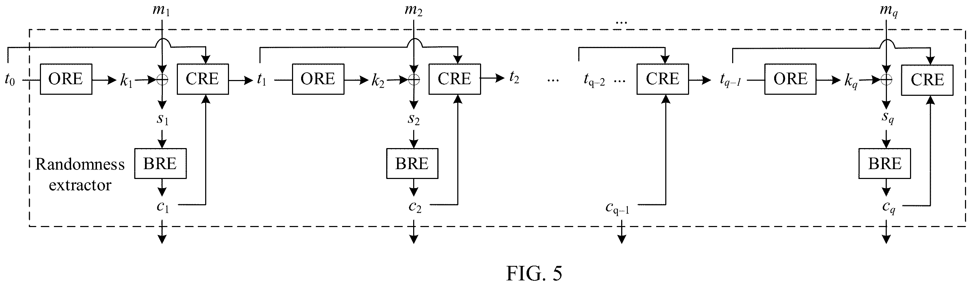

In some possible manners, an $a^{th}$ second message packet $n_a$ in the q second message packets is obtained by performing security processing on an $a^{th}$ first message packet $m_a$ in the q first message packets, and a traverses any positive integer from 1 to q. For example, as shown in FIG. 5, the first security module is the randomness extractor, and the randomness extractor includes a bidirectional randomness extractor (bidirectional randomness extractor, BRE), a compressive randomness extractor (compressive randomness extractor, CRE), and a one-way randomness extractor (one-way randomness extractor, ORE). For a $1^{st}$ first message packet $m_1$, the first security module may perform security processing on $m_1$ based on a random seed $t_0$ to obtain a random seed $t_1$ and a $1^{st}$ second message packet $n_1$. The random seed $t_1$ may be obtained based on $n_1$ and the random seed $t_0$, or may be obtained based on $m_1$ and the random seed $t_0$. When a is greater than or equal to 2, and less than or equal to q, the first security module may perform security processing on $m_a$ based on a random seed $t_{a-1}$ to obtain a random seed $t_a$ and $n_a$. The random seed $t_a$ may be obtained based on $n_a$ and the random seed $t_{a-1}$, or may be obtained based on $m_a$ and the random seed $t_{a-1}$.

S302: The first apparatus reorders the q second message packets.

In some possible manners, the first apparatus may reorder the q second message packets according to a first rule. The first rule may be preset, or may be determined by the first apparatus or the second apparatus, or may be configured by another apparatus for the first apparatus or the second apparatus.

For example, the first rule is arranging in reverse order. In other words, the first apparatus may arrange the q second message packets in reverse order. For example, the q second message packets are denoted as $n_1$, $n_2, ...,$ and $n_q$. After reordering the q second message packets, the first apparatus obtains the q reordered second message packets: $n_q, n_{q-1}, ...,$ and $n_1$.

S303: The first apparatus performs security processing on the q reordered second message packets to obtain q third message packets.

Optionally, the security processing in S303 is implemented by using a second security module. In this case, the first apparatus may input the q reordered second message packets to the second security module to obtain the q third message packets. The second security module is configured to perform security processing on the q reordered second message packets. For example, the second security module is a randomness extractor, and the security processing is randomness extraction processing. For example, as shown in FIG. 4, the q reordered second message packets are denoted as $n_q$, $n_{q-1}, ...,$ and $n_1$. The second security module performs security processing on the q reordered second message packets to obtain the q third message packets, which are denoted as $c_1, c_2, ...,$ and $c_q$.

In some examples, the second security module and the first security module may be a same module. In this way, after performing S301 by using the first security module and reordering the q second message packets, the first apparatus inputs the q reordered second message packets to the first security module, to perform S303. In this example, computing resources of the first apparatus can be saved.

In some other examples, the second security module and the first security module may be two modules. In this way, when performing, by using the second security module, security processing on q reordered second message packets corresponding to one message, the first apparatus may further perform, by using the first security module, security processing on q first message packets corresponding to another message, to improve message processing efficiency. In addition, in this example, a structure of the first apparatus is simple and easy to implement.

In some possible manners, an $a^{th}$ third message packet $c_a$ in the q third message packets is obtained by performing security processing on an $a^{th}$ second message packet (for example, $n_{q-a+1}$) in the q reordered second message packets. For a specific process of the security processing, refer to S301. Details are not described herein again.

S304: The first apparatus sends q signals, and correspondingly, the second apparatus receives the q signals, where the q signals are obtained based on the q third message packets.

An $a^{th}$ signal $x_a$ in the q signals may be obtained based on the $a^{th}$ third message packet $c_a$ in the q third message packets. For example, the $a^{th}$ signal $x_a$ may be a signal obtained after one or more of a channel encoding procedure, a modulation/waveform procedure, a MIMO procedure, and a cyclic redundancy check (Cyclic Redundancy Check, CRC) addition procedure are performed on the $a^{th}$ third message packet $c_a$. Optionally, when q is greater than 1, the first apparatus may simultaneously perform one or more of a channel encoding procedure, a modulation/waveform procedure, a MIMO procedure, and a CRC addition procedure separately on the plurality of third message packets, or may perform one or more of a channel encoding procedure, a modulation/waveform procedure, a MIMO procedure, and a CRC addition procedure separately on different third message packets at different moments.

Optionally, the first apparatus may send the q signals after obtaining the q third message packets, or may send the $a^{th}$ signal $x_a$ after obtaining the $a^{th}$ third message packet $c_a$. In other words, each time one signal determined based on one third message packet is obtained, the signal is sent.

S305: The second apparatus obtains q third message packets based on the q signals.

An $a^{th}$ third message packet $c_a$ in the q third message packets may be obtained based on the $a^{th}$ signal $x_a$ in the q signals. For example, the $a^{th}$ third message packet $c_a$ may be a message packet obtained after one or more of a CRC check procedure, a MIMO procedure, a demodulation/waveform procedure, and a channel decoding procedure are performed on the $a^{th}$ signal $x_a$. Optionally, when q is greater than 1, the second apparatus may simultaneously perform one or more of a CRC check procedure, a MIMO procedure, a demodulation/waveform procedure, and a channel decoding procedure separately on a plurality of signals in the q signals, or may perform one or more of a CRC check procedure, a MIMO procedure, a demodulation/waveform procedure, and a channel decoding procedure separately on different signals in the q signals at different moments.

Optionally, after receiving the q signals, the second apparatus may obtain the q third message packets based on the q signals; or after receiving the $a^{th}$ signal $x_a$, the second apparatus may obtain the $a^{th}$ third message packet $c_a$ based on the $a^{th}$ signal $x_a$.

S306: The second apparatus performs inverse security processing on the q third message packets to obtain q second message packets. If the second apparatus successfully decodes the q signals, the q second message packets obtained by the second apparatus are the q reordered second message packets in S302 and S303, for example, $n_q$, $n_{q-1}$, ..., and $n_1$.

Optionally, in S306, the inverse security processing is implemented by using a third security module. In this case, the second apparatus may input the q third message packets to the third security module to obtain the q second message packets. The third security module is configured to perform inverse security processing on the q third message packets. For example, the third security module is a randomness extractor, and the inverse security processing is randomness extraction inverse processing.

In some possible manners, an $a^{th}$ second message packet (for example, $n_{q-a+1}$) in the q second message packets is obtained by performing inverse security processing on the $a^{th}$ third message packet $c_a$ in the q third message packets.

In this application, the inverse security processing is inverse processing of the security processing. For content of performing inverse security processing on the q third message packets, refer to the description of "performing security processing on the q reordered second message packets" in S303. Details are not described herein again.

S307: The second apparatus reorders the q second message packets in S306.

S307 may be an inverse operation of S302. In this way, if the second apparatus successfully decodes the q signals, the q reordered second message packets obtained in S307 are the q second message packets present before the reordering in S302, for example, $n_1$, $n_2$, ..., and $n_q$.

In some possible manners, the second apparatus may reorder the q second message packets in S306 according to a second rule. The second rule may be preset, or may be determined by the first apparatus or the second apparatus, or may be configured by another apparatus for the first apparatus or the second apparatus.

For example, the second rule is arranging in reverse order. In other words, the second apparatus may arrange the q second message packets in reverse order. For example, the q second message packets in S306 are denoted as $n_q$, $n_{q-1}$, ..., and $n_1$. After reordering the q second message packets, the second apparatus obtains the q reordered second message packets: $n_1$, $n_2$, ..., and $n_q$.

S308: The second apparatus performs inverse security processing on the q reordered second message packets in S307 to obtain q first message packets.

Optionally, in S308, the inverse security processing is implemented by using a fourth security module. In this case, the second apparatus may input the q reordered second message packets in S307 to the fourth security module to obtain the q first message packets. The fourth security module is configured to perform inverse security processing on the q reordered second message packets. For example, the fourth security module is a randomness extractor, and the inverse security processing is randomness extraction inverse processing.

In some possible manners, an $a^{th}$ first message packet $m_a$ in the q first message packets is obtained by performing inverse security processing on an $a^{th}$ second message packet $n_a$ in the q reordered second message packets.

In this application, the inverse security processing is inverse processing of the security processing. For content of performing inverse security processing on the q reordered second message packets, refer to the description of "performing security processing on q first message packets to obtain q second message packets" in S301. Details are not described herein again.

According to the method shown in FIG. 3, after performing first-time security processing on the q first message packets, the first apparatus may reorder the obtained q second message packets, and perform second-time security processing on the q reordered second message packets. In this way, at a non-target receiving node, an error can be diffused in a plurality of message packets to the greatest extent, to improve message security.

In some possible manners, to improve signal receiving performance of the second apparatus, a retransmission mechanism may be applied to the method shown in FIG. 3. Specifically, if it is determined that a result of decoding the $a^{th}$ signal $x_a$ by the second apparatus is that the decoding fails, the first apparatus may resend the $a^{th}$ signal $x_a$ to the second apparatus until the receive end successfully decodes the $a^{th}$ signal $x_a$ or until a quantity of transmissions of the $a^{th}$ signal $x_a$ reaches a quantity threshold. The quantity threshold may be preset, or may be determined by the first apparatus or the second apparatus, or may be configured by another apparatus for the first apparatus or the second apparatus. If it is determined that a result of decoding the $a^{th}$ signal $x_a$ by the second apparatus is that the decoding succeeds, the second apparatus may perform the method in S305 to S308 on the $a^{th}$ signal $x_a$.

For example, the second apparatus may determine the result of decoding the $a^{th}$ signal $x_a$ in the following manner. The second apparatus may decode the $a^{th}$ signal $x_a$, and perform CRC check on a decoding result. If the check succeeds, the second apparatus may determine that the $a^{th}$ signal $x_{a1}$ is successfully decoded. If the check fails, the second apparatus may determine that the second apparatus fails to decode the $a^{th}$ signal $x_a$.

When the second apparatus determines that the $a^{th}$ signal $x_a$ is successfully decoded, the second apparatus may send, to the first apparatus, response information (for example, an acknowledgment (acknowledgment, ACK)) indicating that the $a^{th}$ signal $x_a$ is successfully decoded. When the second apparatus determines that the $a^{th}$ signal $x_a$ fails to be decoded, the second apparatus may send, to the first apparatus, response information (for example, a negative-acknowledgment (non-acknowledgment, NACK)) indicating that the $a^{th}$ signal $x_a$ fails to be decoded. In this way, the first apparatus may determine, based on the response information, the result of decoding the $a^{th}$ signal $x_a$ by the second apparatus.

In some possible manners, the q first message packets in S301 may be all message packets in a to-be-transmitted message. Alternatively, message packets in the to-be-transmitted message may be divided into a plurality of message packet sets, and all message packets in each message packet set are the q first message packets in S301. The following separately provides descriptions with reference to Implementation 1 and Implementation 2.

Implementation 1:

The method shown in FIG. 3 further includes: The first apparatus obtains a to-be-transmitted message, where the to-be-transmitted message includes q first message packets. In this case, the q first message packets may be all message packets in the to-be-transmitted message. Correspondingly, a first message received by the second apparatus includes q signals. In this way, the first apparatus may perform the method in S301 to S304 for the q first message packets in the to-be-transmitted message, and the second apparatus may perform the method in S304 to S308 for the q signals.

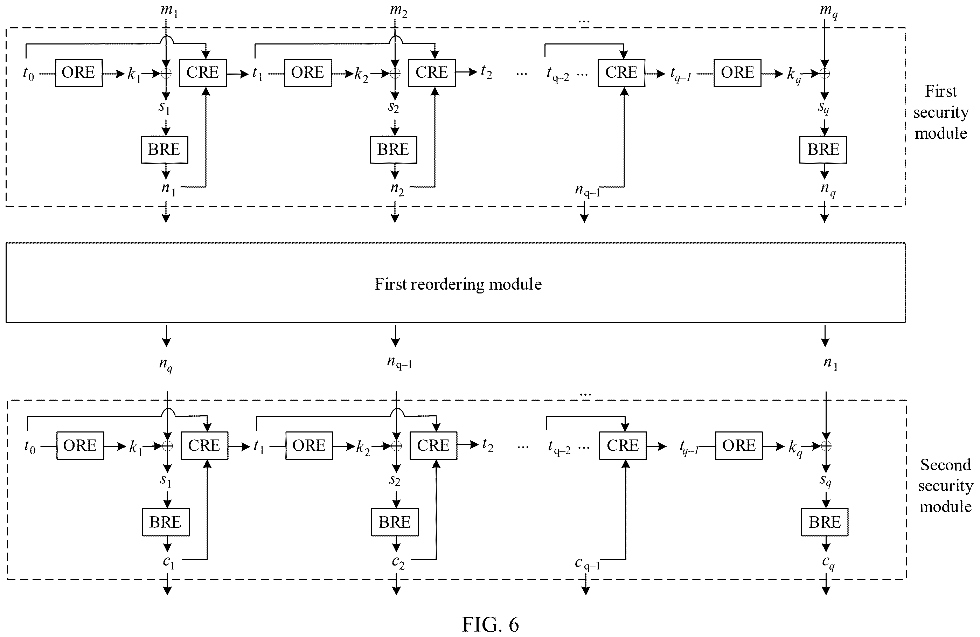

For example, as shown in FIG. 6, the first apparatus includes a first security module, a first reordering module, and a second security module. The to-be-transmitted message includes the q first message packets, which are denoted as $m_1$, $m_2$, ..., and $m_q$. The first apparatus inputs $m_1$, $m_2$, ..., and $m_q$ to the first security module to obtain q second message packets: $n_1$, $n_2$, ..., and $n_q$. The first apparatus reorders the q second message packets through the first reordering module to obtain the q reordered second message packets: $n_q$, $n_{q-1}$, ..., and $n_1$, and inputs $n_q$, $n_{q-1}$, ..., and $n_1$ to the second security module to obtain q third message packets: $c_1$, $c_2$, ..., and $c_q$. The first apparatus may obtain q signals based on $c_1$, $c_2$, ..., and $c_q$, and send the q signals. For specific operations of the first apparatus, refer to S301 to S304. Repeated details are not described again. Correspondingly, the second apparatus may include a same structure as that of the first apparatus, and perform inverse operations of the first apparatus. Details are not described herein again.

In Implementation 1, after performing first-time security processing on the q first message packets in the to-be-transmitted message, the first apparatus may reorder the obtained q second message packets, and perform second-time security processing on the q reordered second message packets. Through reordering, at a non-target receiving node, an error can be diffused in the to-be-transmitted message to the greatest extent, to improve message security.

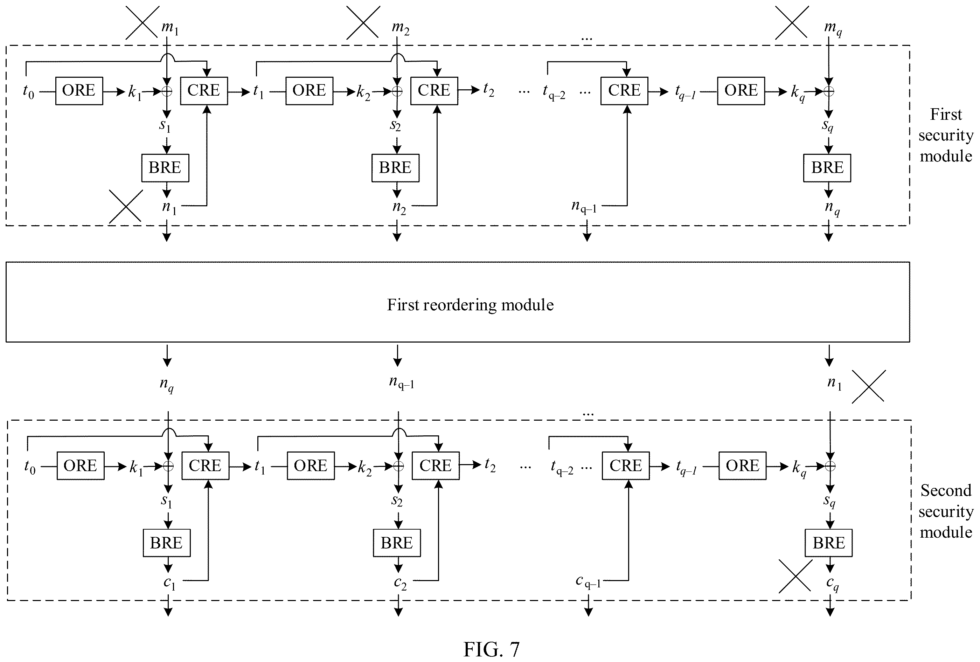

For example, it is assumed that the non-target receiving node incorrectly decodes a last message packet (for example, $c_q$). If the first apparatus includes a first security module, but does not include a first reordering module and a second security module, an error in the message packet $c_q$ can only cause the single message packet $m_q$ to be erroneous. Consequently, a bit error introduced by a physical layer security transmission technology cannot be diffused. As shown in FIG. 7, if the first apparatus includes a first security module, a first reordering module, and a second security module, an error in the message packet $c_q$ may cause all message packets in the to-be-transmitted message to be erroneous. It can be learned that, in Implementation 1, even if the non-target receiving node incorrectly decodes a message packet with a later sequence number, error diffusion can still be implemented between all the message packets, to cause all the message packets to be erroneous. In this way, even if a packet error rate of the non-target receiving node is significantly reduced due to retransmission combining, two times of security processing can still generate a large quantity of errors at the non-target receiving node, to achieve an expected security level.

In some possible manners, in S303, the first apparatus performs security processing on the $a^{th}$ second message packet (for example, $n_{q-a+1}$) in the q reordered second message packets based on a random seed $t_{a-1}$ to obtain the $a^{th}$ third message packet $c_a$. The random seed $t_{a-1}$ is obtained by the first apparatus by performing security processing on an $(a-1)^{th}$ second message packet (for example, $n_{q-a+2}$) in the q reordered second message packets. Correspondingly, in S306, the second apparatus may perform inverse security processing on the $a^{th}$ third message packet $c_a$ based on a random seed $t_{a-1}$ to obtain the $a^{th}$ second message packet (for example, $n_{q-a+1}$) in the q second message packets. The random seed $t_{a-1}$ is obtained by the second apparatus by performing inverse security processing on an $(a-1)^{th}$ third message packet $c_{a-1}$.

In this case, before performing inverse security processing on the q third message packets, the second apparatus may first decode the q signals. If the second apparatus fails to decode the $a^{th}$ signal $x_a$, the second apparatus may request the first apparatus to resend the $a^{th}$ signal $x_a$ until the second apparatus successfully decodes the $a^{th}$ signal $x_a$ or until a quantity of transmissions of the $a^{th}$ signal $x_a$ by the first apparatus reaches a quantity threshold. If the second apparatus successfully decodes all the q signals, the second apparatus performs inverse security processing on the q third message packets to obtain the q second message packets. If the second apparatus fails to decode one or more of the q signals, the second apparatus may determine that the q signals fail to be transmitted.

In some other possible manners, when a is 1, in S303, the first apparatus performs security processing on a $1^{st}$ second message packet (for example, $n_q$) in the q reordered second message packets based on a random seed $t_0$ to obtain a $1^{st}$ third message packet $c_1$. Correspondingly, in S306, the second apparatus may perform inverse security processing on a $1^{st}$ third message packet $c_1$ based on a random seed $t_0$ to obtain a $1^{st}$ second message packet (for example, $n_q$) in the q second message packets. When a is greater than or equal to 2, and less than or equal to q, in S303, the first apparatus may perform security processing on the $a^{th}$ second message packet (for example, $n_{q-a+1}$) in the q reordered second message packets based on a result of decoding an $(a-1)^{th}$ signal $x_{a-1}$ in the q signals by the second apparatus, to obtain the $a^{th}$ third message packet $c_a$. Correspondingly, in S306, the second apparatus may perform inverse security processing on the $a^{th}$ third message packet $c_a$ based on a result of decoding the $(a-1)^{th}$ signal $x_{a-1}$ by the second apparatus, to obtain the $a^{th}$ second message packet (for example, $n_{q-a+1}$) in the q second message packets.

In this case, if the second apparatus successfully decodes all the q signals, or the second apparatus fails to decode only a first signal that is in the q signals and that corresponds to a last second message packet $n_q$ before the reordering, the second apparatus may determine to perform the method in S305 to S308 on the q signals, to obtain the q first message packets; or if the second apparatus fails to decode one or more signals other than a first signal in the q signals, the second apparatus determines that the q signals fail to be transmitted.

The following describes an operation of performing security processing by the first apparatus and an operation of performing inverse security processing by the second apparatus when the result of decoding the $(a-1)^{th}$ signal $x_{a-1}$ in the q signals by the second apparatus is that the decoding succeeds or the decoding fails.

Case 1: The result of decoding the $(a-1)^{th}$ signal $x_{a-1}$ in the q signals by the second apparatus is that the decoding succeeds.

The first apparatus may perform security processing on the $a^{th}$ second message packet (for example, $n_{q-a+1}$) in the q reordered second message packets based on a random seed $t_{a-1}$ to obtain the $a^{th}$ third message packet $c_a$. The random seed $t_{a-1}$ is obtained by performing security processing on the $(a-1)^{th}$ second message packet (for example, $n_{q-a+2}$) in the q reordered second message packets. Correspondingly, the second apparatus may perform inverse operations of the first apparatus. Details are not described herein again. In this way, the first apparatus may update a random seed based on a message packet corresponding to a signal successfully decoded by the second apparatus, to ensure that the second apparatus can correctly receive a subsequent signal, and improve message security while quality of communication between the first apparatus and the second apparatus is ensured.

Case 2: The result of decoding the $(a-1)^{th}$ signal $x_{a-1}$ in the q signals by the second apparatus is that the decoding fails.

The first apparatus may perform security processing on the $a^{th}$ second message packet (for example, $n_{q-a+1}$) in the q reordered second message packets based on a fixed sequence to obtain the $a^{th}$ third message packet $c_a$. Correspondingly, the second apparatus performs inverse security processing on the $a^{th}$ third message packet $c_a$ based on the fixed sequence to obtain the $a^{th}$ second message packet (for example, $n_{q-a+1}$) in S306. Optionally, the fixed sequence is preset, or may be agreed upon by the first apparatus and the second apparatus in advance. The fixed sequence may be, for example, an all-0 sequence or an all-1 sequence. In this way, when a signal fails to be decoded, the first apparatus performs security processing on a subsequent message packet based on the fixed sequence, to avoid performing security processing on a subsequent message packet based on the signal that fails to be decoded. Correspondingly, the second apparatus performs inverse security processing on a subsequent message packet based on the fixed sequence, to avoid performing inverse security processing on the subsequent message packet based on the signal that fails to be decoded, further avoid diffusion, at the second apparatus, of an error corresponding to the signal that fails to be decoded, and improve message security while quality of communication between the first apparatus and the second apparatus is ensured.

The following describes a possible manner of Case 2 with reference to Manner 1 and Manner 2.

Manner 1: When the result of decoding the $(a-1)^{th}$ signal $x_{a-1}$ by the second apparatus is that the decoding fails, the first apparatus sets the $(a-1)^{th}$ second message packet (for example, $n_{q-a+2}$) in the q reordered second message packets as the fixed sequence, and obtains the $a^{th}$ third message packet $c_a$ based on the fixed sequence. Correspondingly, the second apparatus sets the $(a-1)^{th}$ second message packet (for example, $n_{q-a+2}$) obtained in S306 as the fixed sequence, and obtains the $a^{th}$ second message packet (for example, $n_{q-a+1}$) in S306 based on the fixed sequence.

For example, the first apparatus may set the $(a-1)^{th}$ second message packet (for example, $n_{q-a+2}$) as the fixed sequence, and determine a first random seed based on the fixed sequence that is set. The first random seed may be obtained by performing security processing on the $(a-1)^{th}$ second message packet that is set as the fixed sequence. Then, the first apparatus may perform an operation on the first random seed and the $a^{th}$ second message packet (for example, $n_{q-a+1}$) to complete security processing and obtain the $a^{th}$ third message packet $c_a$. Correspondingly, the second apparatus may set the $(a-1)^{th}$ second message packet (for example, $n_{q-a+2}$) as the fixed sequence, and determine a second random seed based on the fixed sequence. The second random seed may be a function of the $(a-1)^{th}$ second message packet that is set as the fixed sequence, and the function is, for example, a hash function. The second random seed may be the same as the first random seed. Then, the second apparatus may perform an operation on the second random seed and the $a^{th}$ third message packet $c_a$ to complete inverse security processing and obtain the $a^{th}$ second message packet (for example, $n_{q-a+1}$).

Currently, if the second apparatus fails to decode a signal, the second apparatus performs inverse security processing on a message packet obtained through decoding, and cannot obtain a correct first message packet, and an error is diffused between different message packets. In Manner 1, when a signal is incorrectly decoded, the first apparatus and the second apparatus may set, as a fixed sequence, a second message packet corresponding to the signal, so that diffusion of an error between different message packets can be avoided. In addition, because a channel between the non-target receiving node and the first apparatus is independent of a channel between the second apparatus and the first apparatus, a sequence number of a message packet in which a decoding error occurs and that is in the non-target receiving node cannot be completely the same as that in the second apparatus. This means that: the non-target receiving node cannot maintain random seed synchronization with the first apparatus and the second apparatus. Therefore, it can be ensured that the decoding error of the non-target receiving node is diffused, and communication security can be improved without affecting transmission performance of the second apparatus.

Manner 2: when the result of decoding the $(a-1)^{th}$ signal $x_{a-1}$ by the second apparatus is that the decoding fails, the first apparatus sets a first random seed as the fixed sequence, and obtains the $a^{th}$ third message packet $c_a$ based on the fixed sequence. Correspondingly, the second apparatus sets a second random seed as the fixed sequence, and obtains the $a^{th}$ second message packet (for example, $n_{q-a+1}$) in S306 based on the fixed sequence.

For example, the first apparatus sets the first random seed as the fixed sequence, and performs an operation on the fixed sequence and the $a^{th}$ second message packet (for example, $n_{q-a+1}$) to complete security processing and obtain the $a^{th}$ third message packet $c_a$. Correspondingly, the second apparatus sets the second random seed as the fixed sequence, and performs an operation on the fixed sequence and the $a^{th}$ third message packet $c_a$ to complete inverse security processing and obtain the $a^{th}$ second message packet (for example, $n_{q-a+1}$) in S306. The second random seed may be the same as the first random seed.

Currently, if the second apparatus fails to decode a signal, the second apparatus performs inverse security processing on a message packet obtained through decoding, and cannot obtain a correct first message packet, and an error is diffused between different message packets. In Manner 2, when a signal is incorrectly decoded, the first apparatus and the second apparatus may set, as a fixed sequence, a random seed corresponding to the signal, so that diffusion of an error between different message packets can be avoided. In addition, because a channel between the non-target receiving node and the first apparatus is independent of a channel between the second apparatus and the first apparatus, a sequence number of a message packet in which a decoding error occurs and that is in the non-target receiving node cannot be completely the same as that in the second apparatus. This means that: the non-target receiving node cannot maintain random seed synchronization with the first apparatus and the second apparatus. Therefore, it can be ensured that the decoding error of the non-target receiving node is diffused, and communication security can be improved without affecting transmission performance of the second apparatus.

In some possible implementations, before Manner 1 and Manner 2, if the result of decoding the $(a-1)^{th}$ signal $x_{a-1}$ by the second apparatus is that the decoding fails, the first apparatus may resend the $(a-1)^{th}$ signal $x_{a-1}$ to the second apparatus until the receive end successfully decodes the $(a-1)^{th}$ signal $x_{a-1}$ or until a quantity of transmissions of the $(a-1)^{th}$ signal $x_{a-1}$ reaches a quantity threshold. If the second apparatus still fails to decode the $(a-1)^{th}$ signal $x_{a-1}$ when the quantity threshold is reached, the first apparatus and the second apparatus may perform the technical solutions in Manner 1 and Manner 2. If the second apparatus successfully decodes the $(a-1)^{th}$ signal $x_{a-1}$ in a retransmission process, the second apparatus may perform steps S305 to S308 on the $(a-1)^{th}$ signal $x_{a-1}$ that is successfully decoded. Details are not described herein again.

Implementation 2:

The method shown in FIG. 3 further includes: The first apparatus obtains a to-be-transmitted message, where the to-be-transmitted message includes K message packet sets, an $i^{th}$ message packet set in the K message packet sets includes q first message packets, K is an integer greater than or equal to 2, and i traverses any positive integer from 1 to K. Correspondingly, the second apparatus receives a second message, where the second message includes K signal sets, an $i^{th}$ signal set in the K signal sets includes q signals, K is an integer greater than or equal to 2, and i traverses all values from 1 to K. In this way, the first apparatus may perform steps S301 to S304 for q first message packets in each message packet set, and the second apparatus may perform steps S304 to S308 for q signals in each signal set.

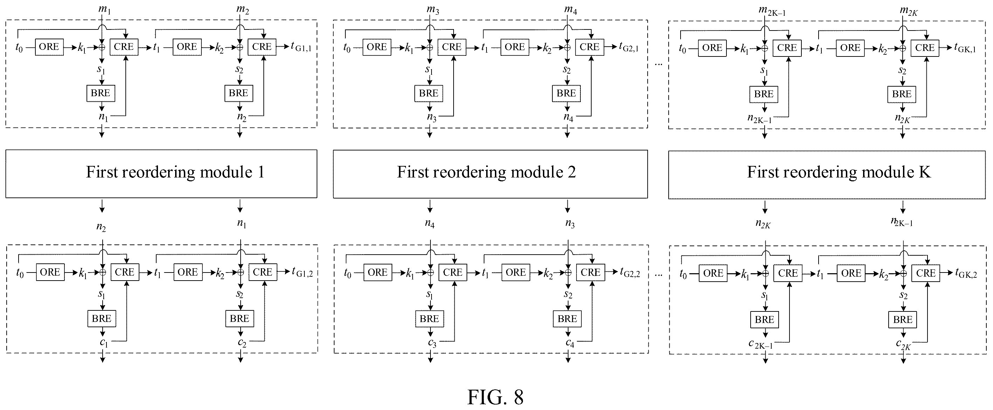

For example, as shown in FIG. 8, the first apparatus includes K first security modules, K first reordering modules, and K second security modules. The to-be-transmitted message includes the K message packet sets, q=2, and each message packet set includes two first message packets. For example, the $i^{th}$ message packet set includes two first message packets, which are denoted as $m_i$ and $m_{2i}$. Each message packet set corresponds to one first security module, one first reordering module, and one second security module. The first apparatus sequentially inputs $m_i$ and $m_{2i}$ to a first security module, a first reordering module, and a second security module that correspond to the $i^{th}$ message packet set, to obtain two third message packets: $c_i$ and $c_{2i}$. The first apparatus may obtain two signals based on $c_i$ and $c_{2i}$, and send the two signals. For specific operations of the first apparatus, refer to S301 to S304. Repeated details are not described again. Correspondingly, the second apparatus may have a structure similar to that of the first apparatus, and perform inverse operations of the first apparatus. Details are not described herein again.

FIG. 8 is described by using an example in which the K message packet sets each include a same quantity of first message packets. It should be understood that, during actual use, quantities of first message packets in different message packet sets may be the same or may be different.

It should be further understood that the first apparatus may simultaneously process at least two of the K message packet sets, that is, the at least two message packet sets may be processed in parallel; or may process different message packet sets in the K message packet sets at different moments, that is, the K message packet sets may be serially processed. Correspondingly, the second apparatus may simultaneously process at least two of the K signal sets, that is, the at least two signal sets may be processed in parallel; or may process different signal sets in the K signal sets at different moments, that is, the K signal sets may be serially processed.

If the second apparatus successfully decodes all signals in a signal set, the second apparatus may perform operations in S304 to S308 on all the signals in the signal set to obtain q first message packets. If the second apparatus fails to decode one or more signals in a signal set, the second apparatus determines that the signal set fails. Optionally, in each signal set, when the second apparatus fails to decode any signal $x_a$, the second apparatus may directly determine that the signal set fails; or the second apparatus may request the first apparatus to resend the signal $x_a$ until all signals in the signal set are successfully decoded or transmission herein reaches a specified quantity threshold.

In Implementation 2, the first apparatus divides the to-be-transmitted message into a plurality of sets, and performs the method shown in FIG. 3 on each set. A quantity of message packets included in each set is adjusted, so that transmission reliability and security can be balanced. In addition, in Implementation 2, the first apparatus needs to buffer only q second message packets corresponding to one set, and does not need to buffer all second message packets corresponding to the to-be-transmitted message, so that buffer overheads can be reduced.

In some possible manners, on the first apparatus side, first initial random seeds corresponding to the K message packet sets may be the same. The first initial random seed is used by the first apparatus to perform security processing on the q first message packets corresponding to the $i^{th}$ message packet set and/or the q reordered second message packets corresponding to the $i^{th}$ message packet set. Correspondingly, on the second apparatus side, second initial random seeds corresponding to the K signal sets may be the same. The second initial random seed is used by the second apparatus to perform inverse security processing on the q third message packets corresponding to the $i^{th}$ signal set and/or the q reordered second message packets corresponding to the $i^{th}$ signal set. The second initial random seed may be the same as the first initial random seed.

For example, the first initial random seed and the second random seed are specified random seeds. The specified random seed may be preset, or may be determined by the first apparatus or the second apparatus, or may be determined by another apparatus for the first apparatus or the second apparatus. For example, as shown in FIG. 8, the first initial random seeds corresponding to the K message packet sets are all $t_0$, and correspondingly, the second initial random seeds corresponding to the K signal sets are all $t_0$.

In this manner, an error can be diffused inside each set, and an error in one set is not diffused to another set, so that message security can be improved while performance of communication between the second apparatus and the first apparatus is ensured.

In some other possible manners, on the first apparatus side, a first initial random seed corresponding to a $1^{st}$ message packet set may be a specified random seed. When i is greater than 1, a first initial random seed corresponding to the $i^{th}$ message packet set may be determined based on a result of decoding q signals corresponding to an $(i-1)^{th}$ message packet set. Correspondingly, on the second apparatus side, a second initial random seed corresponding to a $1^{st}$ signal set may be a specified random seed. When i is greater than 1, a second initial random seed corresponding to the $i^{th}$ signal set may be determined based on a result of decoding q signals in an $(i-1)^{th}$ signal set. The second initial random seed may be the same as the first initial random seed.

With reference to Case 1 and Case 2, the following describes "a first initial random seed corresponding to the $i^{th}$ message packet set may be determined based on a result of decoding q signals corresponding to an $(i-1)^{th}$ message packet set" and "a second initial random seed corresponding to the $i^{th}$ signal set may be determined based on a result of decoding q signals in an $(i-1)^{th}$ signal set".

Case 1: When the second apparatus successfully decodes all the q signals corresponding to the $(i-1)^{th}$ message packet set, the first initial random seed corresponding to the $i^{th}$ message packet set is a random seed obtained based on the $(i-1)^{th}$ message packet set. Correspondingly, the second initial random seed corresponding to the $i^{th}$ signal set is a random seed obtained based on the $(i-1)^{th}$ signal set.

In some examples, when the first initial random seed is used to perform security processing on the q first message packets corresponding to the $i^{th}$ message packet set, the first initial random seed may be obtained by the first apparatus by performing security processing on a last first message packet in the $(i-1)^{th}$ message packet set. Correspondingly, when the second initial random seed is used to perform inverse security processing on the q reordered second message packets corresponding to the $i^{th}$ signal set, the second initial random seed is obtained by the second apparatus by performing inverse security processing on a last reordered second message packet corresponding to the $(i-1)^{th}$ signal set.

For example, as shown in FIG. 8, a first initial random seed corresponding to a $2^{nd}$ message packet set is a random seed $t_{G1,1}$ obtained by performing security processing on $m_2$, a first initial random seed corresponding to a $3^{rd}$ message packet set is a random seed $t_{G2,1}$ obtained by performing security processing on $m_4$, and the rest may be deduced by analogy. Correspondingly, a second initial random seed corresponding to a $2^{nd}$ signal set is a random seed $t_{G1,1}$ obtained by performing inverse security processing on $n_2$, a second initial random seed corresponding to a $3^{rd}$ signal set is a random seed $t_{G2,1}$ obtained by performing inverse security processing on $n_4$, and the rest may be deduced by analogy.

In some other examples, when the first initial random seed is used to perform security processing on the q reordered second message packets corresponding to the $i^{th}$ message packet set, the first initial random seed may be obtained by the first apparatus by performing security processing on a last reordered second message packet corresponding to the $(i-1)^{th}$ message packet set. Correspondingly, when the second initial random seed is used to perform inverse security processing on the q third message packets corresponding to the $i^{th}$ signal set, the second initial random seed is obtained by the second apparatus by performing inverse security processing on a last third message packet corresponding to the $(i-1)^{th}$ signal set.

For example, as shown in FIG. 8, a first initial random seed corresponding to a $2^{nd}$ message packet set is a random seed $t_{G1,2}$ obtained by performing security processing on $n_1$, a first initial random seed corresponding to a $3^{rd}$ message packet set is a random seed $t_{G2,2}$

obtained by performing security processing on $n_3$, and the rest may be deduced by analogy. Correspondingly, a second initial random seed corresponding to a 2nd signal set is a random seed $t_{G1,2}$ obtained by performing inverse security processing on $c_2$, a second initial random seed corresponding to a 3rd signal set is a random seed $t_{G2,2}$ obtained by performing inverse security processing on $c_4$, and the rest may be deduced by analogy.

Case 2: When the second apparatus fails to decode one or more signals corresponding to the (i-1)th message packet set, the first initial random seed and the second random seed are specified random seeds. For specific content of the specified random seed, refer to the foregoing description of the "specified random seed." Details are not described herein again.

In this manner, when the second apparatus successfully decodes all signals corresponding to a message packet set, the message packet set may be used for security processing or inverse security processing of a subsequent message packet set, to avoid performing security processing or inverse security processing based on a message packet set that fails to be decoded, further avoid diffusion, between different sets, of an error corresponding to a signal that fails to be decoded, and improve message security while quality of communication between the first apparatus and the second apparatus is ensured.

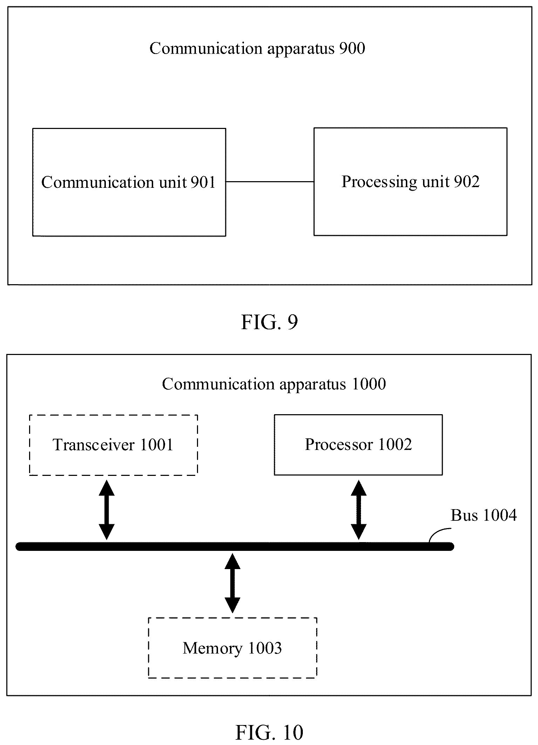

Based on a same technical concept as the method embodiment in FIG. 3, an embodiment of this application provides a communication apparatus in FIG. 9, and the communication apparatus may be configured to perform functions of related steps in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 9, and includes a communication unit 901 and a processing unit 902. The communication apparatus 900 may be used in a terminal device or an access network device, and may implement the communication method provided in the foregoing embodiments and examples of this application. Functions of the units in the communication apparatus 900 are described below.

The communication unit 901 is configured to receive and send information. In some manners, the communication unit 901 may be implemented through a physical interface, a communication module, a communication interface, and an input/output interface. The communication apparatus 900 may be connected to a network cable or a cable through the communication unit, to establish a physical connection to another device. In some other manners, the communication unit 901 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 902 may be configured to support the communication apparatus 900 in performing processing actions in the foregoing method embodiments. The processing unit 902 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 900 is used in the first apparatus in the embodiment of this application shown in FIG. 3. The following describes specific functions of the processing unit 902 in the implementation.

The processing unit 902 is configured to: perform security processing on q first message packets to obtain q second message packets, where q is an integer greater than or equal to 1; reorder the q second message packets; perform security processing on the q reordered second message packets to obtain q third message packets; and send q signals through the communication unit 901, where the q signals are obtained based on the q third message packets.

Optionally, the processing unit 902 is specifically configured to arrange the q second message packets in reverse order.

In a first implementation, the processing unit 902 is further configured to obtain a to-be-transmitted message, where the to-be-transmitted message includes the q first message packets.

For example, the processing unit 902 is specifically configured to: send the q signals through the communication unit 901 after obtaining the q third message packets; or send an ath signal in the q signals through the communication unit 901 after obtaining an ath third message packet in the q third message packets, where the ath signal is obtained based on the ath third message packet, and a sequentially traverses any positive integer from 1 to q.

Optionally, the processing unit 902 is specifically configured to: when determining that a receive end fails to decode an (a-1)th signal in the q signals, and a is greater than or equal to 2, and less than or equal to q, perform security processing on an ath second message packet based on a fixed sequence to obtain the ath third message packet.

In some examples, the processing unit 902 is specifically configured to: set an (a-1)th second message packet in the q reordered second message packets as the fixed sequence; determine a first random seed based on the fixed sequence that is set; and perform an operation on the first random seed and the $a^{th}$ second message packet to complete security processing and obtain the $a^{th}$ third message packet.

In some other examples, the processing unit 902 is specifically configured to: set a first random seed as the fixed sequence; and perform an operation on the fixed sequence that is set and the $a^{th}$ second message packet to complete security processing and obtain the $a^{th}$ third message packet.

In a second implementation, the processing unit 902 is further configured to: obtain a to-be-transmitted message, where the to-be-transmitted message includes K message packet sets, an $i^{th}$ message packet set in the K message packet sets includes the q first message packets, K is an integer greater than or equal to 2, and i traverses any positive integer from 1 to K.

In some possible manners, the processing unit 902 is further configured to: when determining that the receive end fails to decode the $a^{th}$ signal in the q signals, resend the $a^{th}$ signal through the communication unit 901 until the receive end successfully decodes the $a^{th}$ signal or until a quantity of transmissions of the $a^{th}$ signal reaches a quantity threshold, where a traverses any positive integer from 1 to q.

In another implementation, the communication apparatus 900 is used in the second apparatus in the embodiment of this application shown in FIG. 3. The following describes specific functions of the processing unit 902 in the implementation.

The processing unit 902 is configured to: receive q signals through the communication unit 901, where q is an integer greater than or equal to 1; obtain q third message packets based on the q signals; perform inverse security processing on the q third message packets to obtain q second message packets; reorder the q second message packets; and perform inverse security processing on the q reordered second message packets to obtain q first message packets.

Optionally, the processing unit 902 is specifically configured to arrange the q second message packets in reverse order.

In a first implementation, the processing unit 902 is specifically configured to receive a first message through the communication unit 901, where the first message includes the q signals.

For example, the processing unit 902 is specifically configured to: after receiving the q signals, obtain the q third message packets based on the q signals; or after receiving an $a^{th}$ signal in the q signals, obtain an $a^{th}$ third message packet in the q third message packets based on the $a^{th}$ signal, where a sequentially traverses any positive integer from 1 to q.

Optionally, the processing unit 902 is specifically configured to: when a receive end fails to decode an $(a-1)^{th}$ signal in the q signals, perform inverse security processing on the $a^{th}$ third message packet based on a fixed sequence to obtain an $a^{th}$ second message packet.

In some examples, the processing unit 902 is specifically configured to: set an $(a-1)^{th}$ second message packet in the q second message packets as the fixed sequence; determine a second random seed based on the fixed sequence that is set; and perform an operation on the second random seed and the $a^{th}$ third message packet to complete inverse security processing and obtain the $a^{th}$ second message packet.

In some other examples, the processing unit 902 is specifically configured to: set a second random seed as the fixed sequence; and perform an operation on the fixed sequence that is set and the $a^{th}$ third message packet to complete inverse security processing and obtain the $a^{th}$ second message packet.

In a second implementation, the processing unit 902 is specifically configured to: receive a second message through the communication unit 901, where the second message includes K signal sets, an $i^{th}$ signal set in the K signal sets includes the q signals, K is an integer greater than or equal to 2, and i traverses all values from 1 to K.

It should be noted that, in the foregoing embodiment of this application, division into the modules is an example, and is merely logical function division. There may be another division manner during actual implementation. In addition, functional units in embodiments of this application may be integrated into one processing unit, may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 10, and the communication apparatus may be configured to perform related steps in the foregoing method embodiments. The communication apparatus may be used in a terminal device or an access network device, may implement the communication method provided in the foregoing embodiments and examples of this application, and has a function of the communication apparatus shown in FIG. 9. Refer to FIG. 10, the communication apparatus 1000 includes a processor 1002. Optionally, the communication apparatus 1000 further includes a transceiver 1001 and a memory 1003. The transceiver 1001, the processor 1002, and the memory 1003 are connected to each other.

Optionally, the transceiver 1001, the processor 1002, and the memory 1003 are connected to each other through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for indicating the bus in FIG. 10, but this does not indicate that there is only one bus or only one type of bus.

The transceiver 1001 is configured to receive and send information, to implement communication interaction with another device. For example, the transceiver 1001 may be implemented through a physical interface, a communication module, a communication interface, or an input/output interface.

The processor 1002 may be configured to support the communication apparatus 1000 in performing processing actions in the foregoing method embodiments. When the communication apparatus 1000 is configured to implement the foregoing method embodiments, the processor 1002 may be further configured to implement a function of the foregoing processing unit 902. The processor 1002 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 1000 is used in the first apparatus in the embodiment of this application shown in FIG. 3. The following describes specific functions of the processor 1002 in the implementation.

The processor 1002 is configured to: perform security processing on q first message packets to obtain q second message packets, where q is an integer greater than or equal to 1; reorder the q second message packets; perform security processing on the q reordered second message packets to obtain q third message packets; and send q signals through the transceiver 1001, where the q signals are obtained based on the q third message packets.

In another implementation, the communication apparatus 1000 is used in the second apparatus in the embodiment of this application shown in FIG. 3. The following describes specific functions of the processor 1002 in the implementation.

The processor 1002 is configured to: receive q signals through the transceiver 1001, where q is an integer greater than or equal to 1; obtain q third message packets based on the q signals; perform inverse security processing on the q third message packets to obtain q second message packets; reorder the q second message packets; and perform inverse security processing on the q reordered second message packets to obtain q first message packets.

For a specific function of the processor 1002, refer to the descriptions in the communication method provided in the foregoing embodiments and examples of this application, and the specific function descriptions of the communication apparatus 900 in the embodiment of this application shown in FIG. 9. Details are not described herein again.

The memory 1003 is configured to store program instructions, data, and/or the like. Specifically, the program instructions may include program code, and the program code includes computer operation instructions. The memory 1003 may include a RAM, and may further include a non-volatile memory (non-volatile memory), for example, at least one magnetic disk memory. The processor 1002 executes the program instructions stored in the memory 1003, and implements the foregoing functions by using the data stored in the memory 1003, to implement the communication method provided in the foregoing embodiments of this application. The memory 1003 may be integrated with the processor 1002, or may be a memory outside the communication apparatus.

It may be understood that the memory 1003 in FIG. 10 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM and is used as an external cache. Through an example description rather than a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification is intended to include but is not limited to these and any memory of another suitable type.

Based on the foregoing embodiments, an embodiment of this application further provides a computer program product including computer executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: the computer-readable medium may include a RAM, a ROM, an EEPROM, a CD-ROM, another optical disc storage or magnetic disk storage medium, another magnetic storage device, or any other medium that can carry or store expected program code in a form of instruction or data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or another programmable data processing device to work in a specific manner, so that the instructions stored in the computer-readable memory generate an artifact that includes an instruction apparatus. The instruction apparatus implements a function specified in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a function specified in one or more processes in the flowcharts and/or in one or more blocks in the block diagrams.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. In this case, this application is intended to cover these modifications and variations of this application provided that they fall within the scope of protection defined by the claims of this application and their equivalent technologies.

**Claims**

1. A communication method, comprising:

   performing security processing on q first message packets to obtain q second message packets, wherein q is an integer greater than or equal to 1;
   reordering the q second message packets;
   performing security processing on the q reordered second message packets to obtain q third message packets; and
   sending q signals, wherein the q signals are obtained based on the q third message packets.

2. The method according to claim 1, wherein reordering the q second message packets comprises:
   arranging the q second message packets in reverse order.

3. The method according to claim 1 or 2, further comprising:
   obtaining a to-be-transmitted message, wherein the to-be-transmitted message comprises the q first message packets.

4. The method according to any one of claims 1 to 3, wherein sending the q signals comprises:

   sending the q signals after obtaining the q third message packets; or
   sending an $a^{th}$ signal in the q signals after obtaining an $a^{th}$ third message packet in the q third message packets, wherein the $a^{th}$ signal is obtained based on the $a^{th}$ third message packet, and a sequentially traverses any positive integer from 1 to q.

5. The method according to claim 4, wherein when it is determined that a receive end fails to decode an $(a-1)^{th}$ signal in the q signals, and a is greater than or equal to 2, and less than or equal to q, performing security processing on an $a^{th}$ second message packet in the q reordered second message packets to obtain the $a^{th}$ third message packet comprises:
   performing security processing on the $a^{th}$ second message packet based on a fixed sequence to obtain the $a^{th}$ third message packet.

6. The method according to claim 5, wherein performing security processing on the $a^{th}$ second message packet based on the fixed sequence to obtain the $a^{th}$ third message packet comprises:

   setting an $(a-1)^{th}$ second message packet in the q reordered second message packets as the fixed sequence;
   determining a first random seed based on the fixed sequence that is set; and
   performing an operation on the first random seed and the $a^{th}$ second message packet to complete security processing and obtain the $a^{th}$ third message packet.

7. The method according to claim 5, wherein performing security processing on the $a^{th}$ second message packet based on the fixed sequence to obtain the $a^{th}$ third message packet comprises:

   setting a first random seed as the fixed sequence; and
   performing an operation on the fixed sequence that is set and the $a^{th}$ second message packet to complete security processing and obtain the $a^{th}$ third message packet.

8. The method according to claim 1 or 2, further comprising:
   obtaining a to-be-transmitted message, wherein the to-be-transmitted message comprises K message packet sets, an $i^{th}$ message packet set in the K message packet sets comprises the q first message packets, K is an integer greater than or equal to 2, and i traverses any positive integer from 1 to K.

9. The method according to claim 8, wherein a first initial random seed is used to perform security processing on the q first message packets corresponding to the $i^{th}$ message packet set and/or the q reordered second message packets corresponding to the $i^{th}$ message packet set; and

   the first initial random seed is a specified random seed; or
   when i is 1, or when i is greater than 1 and it is determined that a receive end fails to decode one or more signals corresponding to an $(i-1)^{th}$ message packet set, the first initial random seed is a specified random seed; and/or when i is greater than 1 and it is determined that the receive end successfully decodes all signals corresponding to the $(i-1)^{th}$ message packet set, the first initial random seed is a random seed obtained based on the $(i-1)^{th}$ message packet set.

10. The method according to claim 9, wherein that the first initial random seed is the random seed obtained based on the $(i-1)^{th}$ message packet set when the first initial random seed is used to perform security processing on the q first message packets corresponding to the $i^{th}$ message packet set comprises: the first initial random seed is obtained by performing security processing on a last first message packet in the $(i-1)^{th}$ message packet set; and/or

that the first initial random seed is the random seed obtained based on the $(i-1)^{th}$ message packet set when the first initial random seed is used to perform security processing on the q reordered second message packets corresponding to the $i^{th}$ message packet set comprises: the first initial random seed is obtained by performing security processing on a last reordered second message packet corresponding to the $(i-1)^{th}$ message packet set.

11. The method according to any one of claims 1 to 10, further comprising:
when it is determined that the receive end fails to decode the $a^{th}$ signal in the q signals, resending the $a^{th}$ signal until the receive end successfully decodes the $a^{th}$ signal or until a quantity of transmissions of the $a^{th}$ signal reaches a quantity threshold, wherein a traverses any positive integer from 1 to q.

12. The method according to any one of claims 1 to 11, wherein an $a^{th}$ second message packet in the q second message packets is obtained by performing security processing on an $a^{th}$ first message packet in the q first message packets;

the $a^{th}$ third message packet in the q third message packets is obtained by performing security processing on the $a^{th}$ second message packet in the q reordered second message packets;
the $a^{th}$ signal in the q signals is obtained based on the $a^{th}$ third message packet in the q third message packets; and
a traverses any positive integer from 1 to q.

13. A communication method, comprising:

receiving q signals, wherein q is an integer greater than or equal to 1;
obtaining q third message packets based on the q signals;
performing inverse security processing on the q third message packets to obtain q second message packets;
reordering the q second message packets; and
performing inverse security processing on the q reordered second message packets to obtain q first message packets.

14. The method according to claim 13, wherein reordering the q second message packets comprises:

arranging the q second message packets in reverse order.

15. The method according to claim 13 or 14, wherein receiving the q signals comprises:
receiving a first message, wherein the first message comprises the q signals.

16. The method according to any one of claims 13 to 15, wherein obtaining the q third message packets based on the q signals comprises:

after receiving the q signals, obtaining the q third message packets based on the q signals; or
after receiving an $a^{th}$ signal in the q signals, obtaining an $a^{th}$ third message packet in the q third message packets based on the $a^{th}$ signal, wherein a sequentially traverses any positive integer from 1 to q.

17. The method according to claim 16, wherein when a receive end fails to decode an $(a-1)^{th}$ signal in the q signals, performing inverse security processing on the $a^{th}$ third message packet to obtain an $a^{th}$ second message packet in the q second message packets comprises:
performing inverse security processing on the $a^{th}$ third message packet based on a fixed sequence to obtain the $a^{th}$ second message packet.

18. The method according to claim 17, wherein performing security processing on the $a^{th}$ third message packet based on the fixed sequence to obtain the $a^{th}$ second message packet comprises:

setting an $(a-1)^{th}$ second message packet in the q second message packets as the fixed sequence;
determining a second random seed based on the fixed sequence that is set; and
performing an operation on the second random seed and the $a^{th}$ third message packet to complete inverse security processing and obtain the $a^{th}$ second message packet.

19. The method according to claim 17, wherein performing security processing on the $a^{th}$ third message packet based on the fixed sequence to obtain the $a^{th}$ second message packet comprises:

setting a second random seed as the fixed sequence; and
performing an operation on the fixed sequence that is set and the $a^{th}$ third message packet to complete inverse security processing and obtain the $a^{th}$ second message packet.

20. The method according to claim 13 or 14, wherein receiving the q signals comprises:

receiving a second message, wherein the second message comprises K signal sets, an $i^{th}$ signal set in the K signal sets comprises the q signals, K is an integer greater than or equal to 2, and i traverses all values from 1 to K.

21. The method according to claim 20, wherein a second initial random seed is used to perform inverse security processing on the q third message packets corresponding to the $i^{th}$ signal set and/or the q reordered second message packets corresponding to the $i^{th}$ signal set; and

the second initial random seed is a specified random seed; or
when i is 1, or when i is greater than 1 and one or more signals in an $(i-1)^{th}$ signal set fail to be decoded, the second initial random seed is a specified random seed; and/or when i is greater than 1 and all signals in the $(i-1)^{th}$ signal set are successfully decoded, the second initial random seed is a random seed obtained based on the $(i-1)^{th}$ signal set.

22. The method according to claim 21, wherein that the second initial random seed is the random seed obtained based on the $(i-1)^{th}$ signal set when the second initial random seed is used to perform inverse security processing on the q third message packets corresponding to the $i^{th}$ signal set comprises: the second initial random seed is obtained by performing inverse security processing on a last third message packet corresponding to the $(i-1)^{th}$ signal set; and/or that the second initial random seed is the random seed obtained based on the $(i-1)^{th}$ signal set when the second initial random seed is used to perform inverse security processing on the q reordered second message packets corresponding to the $i^{th}$ signal set comprises: the second initial random seed is obtained by performing inverse security processing on a last reordered second message packet corresponding to the $(i-1)^{th}$ signal set.

23. The method according to any one of claims 13 to 22, wherein the $a^{th}$ third message packet in the q third message packets is obtained based on the $a^{th}$ signal in the q signals;

the $a^{th}$ second message packet in the q second message packets is obtained by performing inverse security processing on the $a^{th}$ third message packet in the q third message packets;
an $a^{th}$ first message packet in the q first message packets is obtained by performing inverse security processing on an $a^{th}$ second message packet in the q reordered second message packets; and

a traverses any positive integer from 1 to q.

24. A communication apparatus, comprising:

a communication unit, configured to receive and send information; and
a processing unit, configured to perform the method according to any one of claims 1 to 23 by using the communication unit.

25. A communication apparatus, comprising a processor, wherein the processor is configured to perform the method according to any one of claims 1 to 23.

26. A communication system, comprising:

a first apparatus, configured to implement the method according to any one of claims 1 to 12; and
a second apparatus, configured to implement the method according to any one of claims 13 to 23.

27. A computer-readable storage medium, wherein the computer-readable storage medium stores a computer program or instructions, and when the computer program or the instructions are executed by a communication apparatus, the method according to any one of claims 1 to 23 is implemented.

28. A chip, wherein the chip is coupled to a memory, and the chip reads a computer program stored in the memory, to perform the method according to any one of claims 1 to 23.

29. A computer program product, wherein the computer program product comprises computer program code, and when the computer program code is run, the method according to any one of claims 1 to 23 is implemented.

Access network
device

Terminal device

FIG. 1

$P_e$

Transmit end: First message → Pre-processing → Channel encoding → Modulation/Waveform → MIMO

Radio channel

Receive end: First message ← Post-processing ← Channel decoding ← Demodulation/Waveform ← MIMO

FIG. 2

```
┌─────────────────────────┐                    ┌─────────────────────────┐
│      First apparatus     │                    │     Second apparatus     │
└─────────────────────────┘                    └─────────────────────────┘
             │                                               │
┌─────────────────────────┐                                 │
│ S301: Perform security  │                                 │
│ processing on q first   │                                 │
│ message packets to      │                                 │
│ obtain q second message │                                 │
│ packets                 │                                 │
└─────────────────────────┘                                 │
             │                                               │
┌─────────────────────────┐                                 │
│ S302: Reorder the q     │                                 │
│ second message packets  │                                 │
└─────────────────────────┘                                 │
             │                                               │
┌─────────────────────────┐                                 │
│ S303: Perform security  │                                 │
│ processing on the q     │                                 │
│ reordered second        │                                 │
│ message packets to      │                                 │
│ obtain q third message  │                                 │
│ packets                 │                                 │
└─────────────────────────┘                                 │
             │        S304: q signals                       │
             │─────────────────────────────────────────────▶│
```

S304: q signals

S305: Obtain q third message packets based on the q signals

S306: Perform inverse security processing on the q third message packets to obtain q second message packets

S307: Reorder the q second message packets in S306

S308: Perform inverse security processing on the q reordered second message packets in S307 to obtain q first message packets

FIG. 3

24

FIG. 4

FIG. 5

FIG. 6

FIG. 7

FIG. 8

Communication apparatus 900

Communication unit 901 —— Processing unit 902

FIG. 9

Communication apparatus 1000

Transceiver 1001

Processor 1002

Bus 1004

Memory 1003

FIG. 10

## INTERNATIONAL SEARCH REPORT

| International application No. |
| --- |
| **PCT/CN2023/100802** |

| A. | CLASSIFICATION OF SUBJECT MATTER |
| --- | --- |

H04W12/03(2021.01)i

According to International Patent Classification (IPC) or to both national classification and IPC

| B. | FIELDS SEARCHED |
| --- | --- |

Minimum documentation searched (classification system followed by classification symbols)

H04W: H04L

Documentation searched other than minimum documentation to the extent that such documents are included in the fields searched

Electronic data base consulted during the international search (name of data base and, where practicable, search terms used)

CNABS, CNTXT, CJFD, ENTXTC, ENTXT, DWPI, 3GPP: 随机, 种子, 加密, 二次, 安全, 排序, 顺序, 乱序, 打乱顺序, 双向熵提取器, 压缩熵提取器, 单向熵提取器, random, seed, encrypt+, second+, security, safe, order, sequence, disorder+, BRE, CRE, ORE

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101110944 A (HUBEI KECHUANG HI-TECH NET-VIDEO CO., LTD.) 23 January 2008 (2008-01-23)<br>description, page 5, line 28-page 10, line 10 | 1-29 |
| A | CN 106899607 A (HANGZHOU DPTECH TECHNOLOGIES CO., LTD.) 27 June 2017 (2017-06-27)<br>entire document | 1-29 |
| A | CN 110944009 A (WUHAN WUTOS CO., LTD.) 31 March 2020 (2020-03-31)<br>entire document | 1-29 |
| A | CN 114428979 A (INSTITUTE OF MICROELECTRONICS OF CHINESE ACADEMY OF SCIENCES) 03 May 2022 (2022-05-03)<br>entire document | 1-29 |
| A | GB 202107113 D0 (ARQIT LTD.) 30 June 2021 (2021-06-30)<br>entire document | 1-29 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 February 2024** | **01 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100802**

| Patent document cited in search report | | | Publication date (day/month/year) | Patent family member(s) | | | Publication date (day/month/year) |
|---|---|---|---|---|---|---|---|
| CN | 101110944 | A | 23 January 2008 | None | | | |
| CN | 106899607 | A | 27 June 2017 | None | | | |
| CN | 110944009 | A | 31 March 2020 | None | | | |
| CN | 114428979 | A | 03 May 2022 | None | | | |
| GB | 202107113 | D0 | 30 June 2021 | GB | 2608353 | A | 04 January 2023 |
| | | | | WO | 2022243657 | A1 | 24 November 2022 |
| | | | | CA | 3215230 | A1 | 24 November 2022 |
| | | | | AU | 2022278673 | A1 | 16 November 2023 |

Form PCT/ISA/210 (patent family annex) (July 2022)